# EUROPEAN PATENT SPECIFICATION

(11) **EP 1 940 743 B1**
(45) Date of publication and mention of the grant of the patent: **08.04.2009**
(21) Application number: 06802364.7
(22) Date of filing: 25.08.2006
(51) Int. Cl.: C01G 23/07

(54) **METHOD FOR MAKING A SCOUR MEDIUM AND USE OF SUCH MEDIUM IN A METHOD FOR PRODUCING RUTILE TITANIUM DIOXIDE**
VERFAHREN ZUR HERSTELLUNG EINES PUTZMEDIUMS UND VERWENDUNG EINES SOLCHEN MEDIUMS BEI EINEM VERFAHREN ZUR HERSTELLUNG VON TITANDIOXID VOM RUTILTYP
PROCÉDÉ DE FABRICATION DE MILIEU DE LAVAGE À FOND ET UTILISATION DUDIT MILIEU DANS UN PROCÉDÉ DE FABRICATION DE DIOXYDE DE TITANE RUTILE

(30) Priority: 26.09.2005 US 234996
(43) Date of publication of application: 09.07.2008
(73) Proprietor: Tronox LLC, Oklahoma City, OK 73102 (US)
(72) Inventor: FLYNN, Harry, E., Edmond, OK 73003 (US)
(74) Representative: Maggs, Michael Norman
(86) International application number: PCT/US2006/033319
(87) International publication number: WO 2007/037873

(56) References cited:
- WO-A-20/05113444
- US-A1- 2004 187 392

## Description

The present invention generally relates to the production of rutile titanium dioxide pigments. More specifically, the present invention relates to the making of a scour medium suited for use in the production of rutile titanium dioxide pigments, wherein the medium is prepared in part using a raw (base or unfinished) anatase pigment, such as screened from a calciner discharge in a sulfate process for making titanium dioxide pigments.

In the chloride process for making rutile titanium dioxide, titanium tetrachloride is oxidized in the vapor phase in an oxidation reactor. The rutile titanium dioxide and other reaction products typically are then passed through an externally cooled conduit where they are cooled and coalesced. The titanium dioxide particles primarily form in the gas phase, but due to forces such as thermophoresis and turbulence, the titanium dioxide particles can be swept to the walls of the reactor. Once the particles reach the wall they tend to adhere and build up. Similarly, solid deposits can adhere and build up on the internal walls of the cooling conduit. The buildup of titanium dioxide particles reduces the heat transfer from the process, which causes cooling problems. Moreover, this buildup can eventually plug up the equipment, stopping the flow entirely and necessitating a shutdown for cleaning.

Various scour media have accordingly been developed for use in the oxidation reactor and/or the cooling conduit in removing such deposited solids. Desirable scour media are hard enough to effectively and efficiently scour the walls of a reactor, but not so hard or abrasive such that the media wear away the walls of the oxidation reactor or the cooling conduit. Various types of material have been used as scour media, such as compressed titanium dioxide pigment, mixtures of titanium dioxide and water which are pelletized, sand, aluminum oxide, zirconium oxide, and salts, for example.

Preferable scour media will also be sufficiently inexpensive and sufficiently compatible with the produced pigment (that is, rutile titanium dioxide) such that the scour media need not be separated from the product. For example, when salt is used as a scour medium, it is typically dissolved and washed away. Other scour media, such as sand, must be separated from the pigment stream due to the media's value or tendency to contaminate the pigment.

Applicant discovered, in accordance with United States Patent Application Publication No. 2005/0255036 A1 (published November 17, 2005), that calcining a raw (base or unfinished) anatase pigment such as screened from a calciner discharge in a sulfate process to a crush strength and density meeting the requirements for an acceptable scour medium, resulted in a conversion of a portion of the anatase pigment to rutile. This calcined anatase material could, consequently, be utilized as a scour medium in a chloride process for producing rutile titanium dioxide within commercially acceptable limits on the anatase content of the rutile pigment, depending on the degree of conversion realized from anatase to rutile. However, even at relatively high single pass conversion rates (for anatase to rutile), for typical scour medium usage rates of from 2 to 10 % by mass of the pigment flow more anatase content is still present than is desirable, for example, on the order of 1 % and greater. More stringent calcination conditions produce a higher per-pass conversion to the rutile form, but tend to adversely affect the crush strength and bulk density of the resulting scouring medium.

The present invention concerns the further discovery that by blending rutile titanium dioxide with the base anatase titanium dioxide prior to its calcination, a higher per-pass conversion of the anatase titanium dioxide to rutile occurs than were anatase titanium dioxide used entirely. Without in any sense limiting the present invention, the rutile titanium dioxide thus seems to behave as a catalyst or as a seed material for the anatase to rutile conversion, in the end providing a scour medium useful in a chloride process for making rutile titanium dioxide pigments, which scour medium has the desired crush strength and bulk density but an anatase content in the range of that conventionally exhibited in the production of commercial-grade rutile titanium dioxide pigments. The scour medium thus formed can as a result be used in the usual desired proportions in relation to the pigment flow, preferably without increasing the anatase content of the product and scouring medium combined to 1 percent by weight or more.

Preferably, to be used as a scour medium according to the present invention the calcined rutile/anatase blend will have a density of at least 1.55 g/cm³ and no more than 1.71 g/cm³. Further, the scour medium will preferably have a crush strength of less than 30 percent and a crush strength greater than 15 percent, where the indicated crush strength is measured using a 4K Crush test (per API RP 60 (American Petroleum Institute Recommended Practice 60) - "Recommended Practices for Testing High-Strength Proppants Used in Hydraulic Fracturing Operations" (1995)).

As has been mentioned above, it would be desirable to be able to use the calcined anatase/rutile blends as scour media at typical rates of addition for scour media, namely, from 2 to 10 % of the pigment mass flow, while also maintaining the anatase content of the resulting titanium dioxide product (including the spent scour medium) below 1 percent by weight. More preferably, the conversion of the anatase portion of the anatase/rutile blend calcined for the scour medium will be such that the anatase content of the titanium dioxide product (including the spent scour medium) will be less than 0.5 percent by weight. Most preferably, the anatase content will be on the order of no more than 0.2 percent by weight.

We have found that by calcining anatase/rutile blends rather than simply anatase pigment, sufficiently greater conversions can be achieved of the anatase portion than would be seen starting just with the anatase pigment, to permit the considerably less costly or valuable anatase portion of the blend to be at least 50 percent by weight of the blend yet still have the anatase content in the product be below 1 percent by weight. More preferably, with careful selection of the calcination conditions, the anatase portion of the blends can be at least 75 percent by weight of the blend. Most preferably, the anatase portion of the blend can be at least 90 percent by weight of the blend. However, in principle, because anatase pigments are of lesser commercial value generally, any use of anatase in replacement of the rutile titanium dioxide will provide cost benefits and will be worthwhile, for example, as little as 10 percent by weight of the anatase material.

The calcination of the anatase/rutile blends leading to the scour medium of the present invention will be well within the capabilities of those skilled in the art, and the methods and apparatus which have long been used for calcination in the production of sulfate grade anatase titanium dioxide pigments should be equally available for use with the anatase/rutile blends of the present invention.. For example, the calcined anatase/rutile blends useful as scour media in accordance with the present invention can be produced by starting with anatase and rutile titanium dioxides in the desired proportion and agglomerating with water to form pellets. The pellets are then dried and screened to remove pellet sizes that are undesirably too large or undesirably too small. The pellets are then calcined in a rotary calciner at the determined temperature for an amount of time (that is, the residence time) sufficient to calcine the anatase/rutile blend and provide the needed crush strength and bulk density. The temperature and residence time for calcining may vary depending on the particular anatase and rutile titanium dioxides used and on the proportions of each, as well as on the needed conversion of anatase to rutile given how much anatase can remain in the ending rutile titanium dioxide pigment product. Those skilled in the art will, however, be able to determine the appropriate conditions for a given combination of the anatase and rutile titanium dioxides without undue experimentation, particularly given the conditions and results seen in the examples below.

The calcined scour medium is then useful in a process for the production of rutile titanium dioxide pigment. Methods for introducing scour media into such a process are known in the art. For example, scour media according to the present invention can be introduced into an oxidation reactor used in the chloride process for producing rutile titanium dioxide. Alternately, scour media according to the present invention can be introduced into cooling conduits used in the chloride process for producing rutile titanium dioxide.

The present invention is more particularly illustrated by the following examples, in which various calcination temperatures and residence times are used for calcining (in a conventional rotary calciner) an anatase titanium dioxide "A" on the one hand and a 55:45 blend by weight of the same anatase titanium dioxide "A" with a rutile titanium dioxide "B", and the bulk density and 4K crush strengths determined for the resulting calcined scour media. As may be observed from the results shown in Tables 1 and 2 below, the addition of rutile titanium dioxide to form a blend results in a greater conversion of the anatase portion when calcined and a greater rutile content in the resultant scour medium than would be expected based on anatase conversion rates, were the starting material only anatase titanium dioxide. Further, the 55:45 blend when calcined at 1100 degrees Celsius produced a material that was just outside of the preferred crush strength range (in which higher numbers indicate a softer material) of from 15 to 30 percent, yet that was 94.6 percent rutile. A higher calcination temperature should result in a still greater conversion of the anatase titanium dioxide to rutile form and provide a greater crush strength within the preferred range.

**Table 1 - Anatase A Only**

| Calcining Temp. (deg. C) | Residence Time (minutes) | Bulk Density (g/cc) | 4K Crush Strength (percent) | Pct. Rutile |
|---|---|---|---|---|
| 1050 | 30 | 1.36 | 51.2 | 3 |
| 1100 | 30 | 1.59 | 11.7 | 84.3 |

**Table 2 - Anatase A/Rutile B**

| Calcining Temp. (deg. C) | Residence Time (minutes) | Bulk Density (g/cc) | 4K Crush Strength (percent) | Pct. Rutile | Theoretical Pct. Rutile, Based on Anatase Only Conversion Rates |
|---|---|---|---|---|---|
| 1050 | 30 | 1.51 | 52 | 87.1 | 56.4 |
| 1075 | 30 | 1.67 | 44.3 | 90 | |
| 1100 | 30 | 1.79 | 35.7 | 94.6 | 92.9 |

The present invention in sum provides for scour media that can be effectively utilized in the chloride process for production of rutile titanium dioxide without having to be separated or recovered from the final product. While the present invention has been described in detail with respect to specific embodiments, it will be appreciated that those skilled in the art may readily conceive of alterations to, variations of and equivalents to these specific preferred embodiments. Accordingly, the scope of the present invention should be assessed as that of the appended claims and by equivalents thereto.

## Claims

1. A method of making a scour medium for use in the manufacture of chloride process rutile titanium dioxide pigment, including the steps of forming a pelletized blend of anatase and rutile titanium dioxides and calcining the same.

2. The method of Claim 1, wherein the anatase titanium dioxide in the blend is at least fifty percent by weight of the anatase and rutile titanium dioxides combined by weight.

3. The method of Claim 2, wherein the calcined scour medium is **characterized by** a density of 1.55 grams/cubic centimeter to 1.71 grams per cubic centimeter and by a 4K crush strength determined in accordance with the API RP 60 test method of between 30 and 15 percent.

4. The method of Claim 1, wherein the anatase titanium dioxide is sufficiently converted to the rutile form in the calcination of the pelletized blend, so that when the scour medium is employed at up to 10 percent by mass of the pigment and scour medium solids received from an oxidizer of a chloride process for making rutile titanium dioxide, the anatase content of the pigment and spent scour medium solids is less than 1 percent by weight.

5. A method for reducing titanium dioxide buildup in equipment used for the production of titanium dioxide, comprising the steps of:
calcining a blend of anatase and rutile titanium dioxides to produce a scour medium; and
introducing the scour medium into the equipment used for the production of titanium dioxide.

6. The method of Claim 5, wherein the calcining step takes place at a temperature greater than 1025 °C.

7. The method of Claim 5, wherein the blend is calcined to a crush strength between 30 percent and 15 percent.

8. The method of Claim 5, wherein the blend is calcined to a density of from 1.55 g/cm³ to 1.71 g/cm³_{.}

9. The method of Claim 5, wherein the calcined blend is introduced into an oxidation reactor.

10. The method of Claim 5, wherein the calcined blend is introduced into a cooling conduit.

11. The method of Claim 5, wherein the blend is at least 10 percent anatase by weight.

12. The method of Claim 5, wherein the blend is at least 50 percent anatase by weight.

13. The method of Claim 5, wherein the blend is at least 75 percent anatase by weight.

14. The method of Claim 5, wherein the blend is at least 90 percent anatase by weight.

15. The method of Claim 5, wherein the proportions of the anatase and rutile titanium dioxides in the blend are selected and calcinations conditions employed to effect at least that degree of conversion of the anatase titanium dioxide in the blend which enables an anatase content of less than 1 percent by weight of the combined produced titanium dioxide and spent scouring medium, when the scour medium is used to an extent whereby it comprises from 2 to 10 percent of the mass flow through the production equipment for producing said titanium dioxide.

16. The method of Claim 15, wherein the anatase content of the produced titanium dioxide and spent scouring medium is maintained at less than 0.5 percent by weight.

17. The method of Claim 16, wherein the anatase content of the produced titanium dioxide and spent scouring medium is maintained at less than 0.2 percent by weight.

## Patentansprüche

1. Verfahren zum Herstellen eines Putzmediums zur Verwendung in der Herstellung von Rutil-Titandioxid-Pigment nach dem Chloridverfahren, welches die Schritte der Bildung einer pelletierten Mischung aus Anatas- und Rutil-Titandioxiden und deren Calcinierung einschließt.

2. Verfahren nach Anspruch 1, worin das Anatas-Titandioxid in der Mischung mindestens fünfzig Prozent nach Gewicht der vereinigten Anatas- und Rutil-Titandioxide nach Gewicht ist.

3. Verfahren nach Anspruch 2, worin das calcinierte Putzmedium durch eine Dichte von 1,55 Gramm/Kubikzentimeter bis 1,71 Gramm pro Kubikzentimeter und durch eine 4K Bruchfestigkeit, bestimmt in Übereinstimmung mit dem API RP 60 Testverfahren, von zwischen 30 und 15 Prozent **gekennzeichnet** ist.

4. Verfahren nach Anspruch 1, worin das Anatas-Titandioxid in der Calcinierung der pelletierten Mischung ausreichend in die Rutilform umgewandelt wird, so dass wenn das Putzmedium bei bis zu 10 Prozent nach Masse der Pigment- und Putzmedium-Feststoffe, erhalten von einem Oxidationsmittel eines Chloridverfahrens zum Herstellen von Rutil-Titandioxid, eingesetzt wird, der Anatasgehalt der Pigment- und verbrauchten Putzmedium-Feststoffe geringer als 1 Prozent nach Gewicht ist.

5. Verfahren zum Verringern von Titandioxid-Aufbau in Ausrüstung, welche für die Herstellung von Titandioxid verwendet wird, welches die Schritte umfasst:
Calcinieren einer Mischung aus Anatas- und Rutil-Titandioxid, um ein Putzmedium herzustellen; und
Einführen des Putzmediums in die Ausrüstung, welche für die Herstellung von Titandioxid verwendet wird.

6. Verfahren nach Anspruch 5, worin der Calcinierungsschritt bei einer Temperatur größer als 1025°C stattfindet.

7. Verfahren nach Anspruch 5, worin die Mischung zu einer Bruchfestigkeit zwischen 30 Prozent und 15 Prozent calciniert wird.

8. Verfahren nach Anspruch 5, worin die Mischung zu einer Dichte von 1,55 g/cm³ bis 1,71 g/cm³ calciniert wird.

9. Verfahren nach Anspruch 5, worin die calcinierte Mischung in einen Oxidationsreaktor eingeführt wird.

10. Verfahren nach Anspruch 5, worin die calcinierte Mischung in eine Kühlrohrleitung eingeführt wird.

11. Verfahren nach Anspruch 5, worin die Mischung mindestens 10 Prozent Anatas nach Gewicht ist.

12. Verfahren nach Anspruch 5, worin die Mischung mindestens 50 Prozent Anatas nach Gewicht ist.

13. Verfahren nach Anspruch 5, worin die Mischung mindestens 75 Prozent Anatas nach Gewicht ist.

14. Verfahren nach Anspruch 5, worin die Mischung mindestens 90 Prozent Anatas nach Gewicht ist.

15. Verfahren nach Anspruch 5, worin die Anteile der Anatas- und Rutil-Titandioxide in der Mischung gewählt und Caclcinierungsbedingungen eingesetzt werden, um mindestens den Grad der Umwandlung des Anatas-Titandioxids in der Mischung zu bewirken, welcher einen Anatasgehalt von weniger als 1 Prozent nach Gewicht des vereinigt hergestellten Titandioxid und verbrauchten Putzmediums ermöglicht, wenn das Putzmedium in einem Ausmaß verwendet wird, wodurch es von 2 bis 10 Prozent des Massestroms durch die Herstellungsausrüstung zum Herstellen von besagtem Titandioxid umfasst.

16. Verfahren nach Anspruch 15, worin der Anatasgehalt des hergestellten Titandioxids und verbrauchten Putzmediums bei weniger als 0,5 Prozent nach Gewicht gehalten wird.

17. Verfahren nach Anspruch 16, worin der Anatasgehalt des hergestellten Titandioxids und verbrauchten Putzmediums bei weniger als 0,2 Prozent nach Gewicht gehalten wird.

## Revendications

1. Procédé de préparation d'un matériau de décrassage utilisable dans la fabrication d'un pigment à base de dioxyde de titane de type rutile par un procédé au chlorure, comprenant les étapes consistant à former un mélange aggloméré composé de dioxydes de titane de type anatase et rutile et à le calciner.

2. Procédé selon la revendication 1, dans lequel le dioxyde de titane de type anatase dans le mélange représente au moins cinquante pour cent en poids des dioxydes de titane de type anatase et rutile combinés en poids.

3. Procédé selon la revendication 2, dans lequel le matériau de décrassage calciné est **caractérisé par** une masse volumique de 1,55 gramme/centimètre cube à 1,71 gramme par centimètre cube et par une résistance au broyage 4K déterminée selon le procédé de test API RP 60 entre 30 et 15 pour cent.

4. Procédé selon la revendication 1, dans lequel le dioxyde de titane de type anatase est suffisamment converti en forme rutile lors de la calcination du mélange aggloméré, de sorte que quand le matériau de décrassage est utilisé jusqu'à 10 pour cent en poids du pigment et le matériau solide de décrassage reçu d'un dispositif d'oxydation d'un procédé au chlorure permettant de préparer du dioxyde de titane de type rutile, la teneur en anatase du pigment et du matériau solide de décrassage usagé représentent moins de 1 pour cent en poids.

5. Procédé permettant de réduire l'accumulation de dioxyde de titane dans un équipement utilisé pour la production de dioxyde de titane, comprenant les étapes suivantes :
la calcination d'un mélange de dioxydes de titane de type anatase et rutile pour produire un matériau de décrassage ; et
l'introduction du matériau de décrassage dans l'équipement utilisé pour la production du dioxyde de titane.

6. Procédé selon la revendication 5, dans lequel l'étape de calcination a lieu à une température supérieure à 1025°C.

7. Procédé selon la revendication 5, dans lequel le mélange est calciné jusqu'à une résistance au broyage située entre 30 pour cent et 15 pour cent.

8. Procédé selon la revendication 5, dans lequel le mélange est calciné jusqu'à une masse volumique de 1,55 g/cm³ à 1,71 g/cm³.

9. Procédé selon la revendication 5, dans lequel le mélange calciné est introduit dans un réacteur d'oxydation.

10. Procédé selon la revendication 5, dans lequel le mélange calciné est introduit dans une conduite de refroidissement.

11. Procédé selon la revendication 5, dans lequel le mélange contient au moins 10 pour cent en poids d'anatase.

12. Procédé selon la revendication 5, dans lequel le mélange contient au moins 50 pour cent en poids d'anatase.

13. Procédé selon la revendication 5, dans lequel le mélange contient au moins 75 pour cent en poids d'anatase.

14. Procédé selon la revendication 5, dans lequel le mélange contient au moins 90 pour cent en poids d'anatase.

15. Procédé selon la revendication 5, dans lequel les proportions de dioxydes de titane de type anatase et rutile dans le mélange sont sélectionnées et les conditions de calcination utilisées permettent d'effectuer au moins ce degré de conversion du dioxyde de titane de type anatase dans le mélange qui permet l'obtention d'une teneur en anatase inférieure à 1 pour cent en poids de la combinaison du dioxyde de titane produit et du matériau de décrassage usagé, quand le matériau de décrassage est utilisé jusqu'à un point où il comprend 2 à 10 pour cent du débit massique traversant l'équipement de production permettant de produire ledit dioxyde de titane.

16. Procédé selon la revendication 15, dans lequel la teneur en anatase du dioxyde de titane produit et du matériau de décrassage usagé est maintenue à moins de 0,5 pour cent en poids.

17. Procédé selon la revendication 16, dans lequel la teneur en anatase du dioxyde de titane produit et du matériau de décrassage usagé est maintenue à moins de 0,2 pour cent en poids.
